Europäisches Patentamt

European Patent Office

Office européen des brevets

(11) Publication number: 0 288 590 B1

# EUROPEAN PATENT SPECIFICATION

(45) Date of publication of patent specification: 01.07.92

(51) Int. Cl.⁵: **B65G 57/30**, B65G 65/00, B65G 1/04, B65G 47/38

(21) Application number: 87106156.0

(22) Date of filing: 28.04.87

(54) Tyre handling system.

(43) Date of publication of application:
02.11.88 Bulletin 88/44

(45) Publication of the grant of the patent:
01.07.92 Bulletin 92/27

(84) Designated Contracting States:
DE FR IT

(56) References cited:
EP-A- 0 077 304
AT-B- 301 449
US-A- 4 354 786

(73) Proprietor: SUMITOMO HEAVY INDUSTRIES,
LTD
2-1 Ohtemachi 2-chome Chiyoda-ku
Tokyo 100(JP)

Proprietor: Bridgestone Corporation
10-1, Kyobashi 1-Chome Chuo-Ku
Tokyo 104(JP)

(72) Inventor: Hiyama, Hisato
3-47, Toyooka-2-chome
Iruma-shi(JP)
Inventor: Joe, Yukiyasu
2-5-502, Ogawahigashicho-3-chome
Kodaira-shi(JP)
Inventor: Kubota, Shunro
10-17-203, Kaijin-6-chome
Funabashi-shi(JP)
Inventor: Tanaka, Toshihiko
10-17-103, Kaijin-6-chome
Fanabashi-shi(JP)
Inventor: Kameda, Takuichi
820-92-14-193, Araku
Iruma-shi(JP)

(74) Representative: Henkel, Feiler, Hänzel & Partner
Möhlstrasse 37
W-8000 München 80(DE)

## Description

### BACKGROUND OF THE INVENTION

Field of the Invention:

The present invention relates to a tyre handling system according to claim 1.

Description of the Prior Art:

Hitherto, the supply of tyres to a stacking device has been conducted by conveying tyres in a one-by-one fashion towards the stacking device by means of a conveyor, stopping a tyre when it has reached a position near the stacking device, and manually conveying the tyre one by one to the stacking device. In another known tyre supplying system, a tyre stopping device and a conveying device for conveying the stopped tyre one by one are used in combination.

The supply of the tyre relying upon the manual work suffers from an impractically low efficiency of the work, as well as a huge labour cost, due to the necessity for much human labour. On the other hand, the known system which makes use of a combination of the tyre stopping device and the tyre conveying device requires a complicated mechanism for clamping and conveying the tyre one by one, as well as a large installation space for such devices and mechanism. In addition, a complicated control is required for operating both the tyre stopping device and the tyre conveying device smoothly in a timed relation.

The shelving of the stack of tyres has been conducted manually by placing the stack of tyres in a frame pallet. In some cases, a fork lift with clamp arms capable of clamping the stack of tyres, or a power-driven roller conveyor capable of clamping the tyre stack at upper and lower sides thereof is used. The method which makes use of a fork lift, not to mention the manual shelving, is inferior in the efficiency of the work, because it requires much human labour, as well as a high degree of skill. The method which employs the roller conveyor encounters a difficulty particularly when the stack of tyres is placed at an offset from the center of the storage position on the frame pallet, although this method improves the efficiency appreciably.

In some cases, a special consideration has to be given to the orientation or posture of the tyres to be stacked. Namely, when each of the tyres to be stacked has a white belt or white characters on of the side walls thereof, there is a fear that the white belt or white characters may be contaminated when the black other side wall of the adjacent tyre is placed directly thereon. In such a case, it is necessary that the every other tyres are inverted so that the tyres make contact at their white sides or black sides. The inversion of the tyre also has relied upon manual labour and, hence, has suffered from low working efficiency and large labour cost.

### SUMMARY OF THE INVENTION

Accordingly, an object of the present invention is to provide a tyre handling system which is capable of performing fully automatically a series of operation starting from the sorting till the shelving, thereby overcoming the above-described problems of the prior art.

Another object of the present invention is to provide a tyre handling system in which the constructions of automatic devices incorporated in the system are simplified so as to lower the cost of the system as a whole.

To these ends, according to the present invention and as it is claimed in claim 1, there is provided a tyre handling system having an automatic tyre sorting device, a tyre stacking device for stacking tyres, an automatic tyre supplying device for automatically supplying the tyre stacking device with the tyres sorted by the tyre sorting device, and a tyre shelving device for receiving the stacks of tyre and placing the stacks of tyres in frame pallets, wherein the tyre shelving device includes: a tyre receiving conveyor for conveying the stacks of tyres to a predetermined position; a conveyor line installed in the vicinity of the predetermined position and extending in the direction transverse to the tyre receiving conveyor, the conveyor line being adapted to convey the frame pallets; tilting means adapted for carrying the pallets and capable of performing a 90° tilting motion between a first position at which the pallets are laid aside the predetermined position and a second position adjacent to the first position and where the pallets stand upright on the conveyor line; pushing means disposed to oppose the pallets in the first position across the tyre receiving conveyor and adapted to engage with the stacks of tyres on said tyre receiving conveyor so as to push said stacks of tyres into said pallets in said first position; and automatic centering means provided on the portion of said pushing means engageable with said stacks of tyres and adapted to center said stacks of tyres with respect to a predetermined central axis.

Further preferred embodiments are claimed in claims 2 to 9.

Preferably, the tyre supplying device of the tyre handling system includes a conveyor line arranged along a slant plane descending towards the tyre stacking device, stopper means disposed on the end of said conveyor line adjacent to said tyre stacking device and having a height suitable for stopping a tyre which is being conveyed by said conveyor line, and a movable conveyor forming a portion of said conveyor line adjacent to said tyre stacking device, said movable conveyor having a length large enough to carry a tyre thereon and movable between an upper position and a lower position with its one end moving along said stopper means, said movable conveyor, then in said lower position, has said one end placed at a level below the upper end of said stopper means and the other end placed on said conveyor line so as to enable said stopper means to stop a tyre conveyed by said conveyor line and, when in said upper position, has said one end placed at a level above said upper end of said stopper means so as to allow said tyre to move over said upper end of said stopper means, while the other end is positioned above said conveyor line so as to stop a succeeding tyre.

The tyre handling system of the invention can have an automatic tyre inverting device which inverts selected tyres out of a series of tyres which are conveyed with their one side walls resting on a conveyor. The tyre inverting device has a casing of a size large enough to receive a tyre and disposed along said conveyor line which descends towards said tyre stacking device, said casing having an entrance and an exit which open on said conveyor line and sizes large enough to enable said tyre to pass therethrough, an opening and closing means for selectively opening and closing said exit, and inverting means for turning said casing upside down through 180° such that said entrance and said exit are reversed.

The above and other objects, features and advantages of the present invention will become clear from the following description of the preferred embodiment when the same is read in conjunction with the accompanying drawings.

## BRIEF DESCRIPTION OF THE DRAWINGS

Fig. I is a schematic perspective view of the whole portion of a tyre handling apparatus in accordance with the present invention;

Fig. 2 is a front elevational view of an example of a tyre supplying device incorporated in the tyre handling system of the present invention;

Fig. 3 is a plan view taken along the line III-III of Fig. 2;

Fig. 4 is a front elevational view of a swingable conveyor incorporated in the device shown in Fig. 2, placed in the lowermost end of its stroke;

Fig. 5 is a front elevational view of the tyre handling system of the present invention equipped with a tyre inverting device installed in the sorting line of the system;

Fig. 6 is an enlarged front elevational view of the inverting device;

Fig. 7 is a plan view taken along the line VII-VII of Fig. 6;

Fig. 8 is a sectional view taken along the line VIII-VIII and viewed in the direction of arrow in Fig. 6;

Fig. 9 is a front elevational view of a tyre inverting device shown in Fig. 6 during tyre inverting operation;

Fig. I0 is a plan view of an example of a tyre shelving device incorporated in the tyre handling system of the present invention;

Fig. II is a front elevational view of the tyre shelving device taken along the line XI-XI and viewed in the direction of arrow in Fig. I0;

Fig. I2 is a sectional view taken along the line XII-XII and viewed in the direction of the arrow in Fig. I;

Fig. I3 is an enlarged front elevational view taken along the line XIII-XIII and viewed in the direction of arrow in Fig. I0;

Fig. I4 is a sectional view taken along the line XIV-XIV of Fig. I; and

Fig. I5 is a front elevational view of shelved tyres in a so-called bridging state.

## DESCRIPTION OF THE PREFERRED EMBODIMENTS

As shown in Fig. I, the tyre handling system in accordance with the present invention is conveniently installed in a two-storied building. Tyres forwarded from a production/inspection line are conveyed from an underground station to a first floor by means of a conveyor 2 which runs through an opening formed in the ground floor. The conveyor 2 is connected to a conveyor 3 which runs from the underside of the second floor to a side of the same. The tyres which have been transferred from the conveyor 2 to the conveyor 3 are sent to a sorting device A installed on the second floor, through a reading section 4. The sorting device A is constituted by an endless belt in which a plurality of pallets are connected in series. A plurality of tyre sorting lines 5 are arranged on both sides of the sorting device A so as to receive tyres sorted by the latter. The arrangement is such that each pallet is adapted to tilt when it passes a particular sorting line 5 so that the tyre carried by the pallet slides into the particular sorting line 5. The sorting line 5 to which the tyre is to be delivered is determined as the type, standard and the size of the tyre are read when the tyre passes through the reading section 4. Each sorting line 5 is provided with a tyre stacking device B. The tyres delivered to each sorting line are supplied one by one by a later-mentioned automatic tyre supplying device to the stacking device B and are stacked by the stacking device B. In the case where the tyres have white side walls or white characters on one side thereof, the tyres have to be stacked that the white sides or the black sides of adjacent tyres face each other. To this end, it is necessary that every other tyres on each sorting line are inverted. A later-mentioned tyre inverting device is therefore disposed between the automatic tyre supplying device and the stacking device B.

The stack of the tyres is pushed forward by the succeeding stack and reaches the outlet of the sorting line 5. A rail track is laid along the outlets of the sorting lines 5. Shuttle cars C are adapted to run on the rail track. In Fig. l, the shuttle car C is shown in a waiting position. The shuttle car C is provided with a curved conveyor 6 having an entrance which is adapted to face the outlet of the sorting line 5 when the shuttle car C is positioned aside the sorting line 5. The conveyor 6 is adapted to receive several stacks of tyres from the sorting line 5. The shuttle car C then runs along the rail track to the left end position as viewed in Fig. l and delivers the stacks of tyres to lifters 7, 7'. The lifters 7,7' are vertically movable between the first and the second floors and are adapted to be stationed, when they have ascended to the second floor, in openings 8,8' formed in the second floor. The stacks of tyres moved down to the first floor by the lifters 7,7' are delivered to a tyre shelving device D and are shelved on a frame pallet. The thus shelved stacks of tyres are conveyed to a store house by means of a fork lift 9. A reference numeral l0 designates a conveyor for conveying tyres which have overflown the sorting device A.

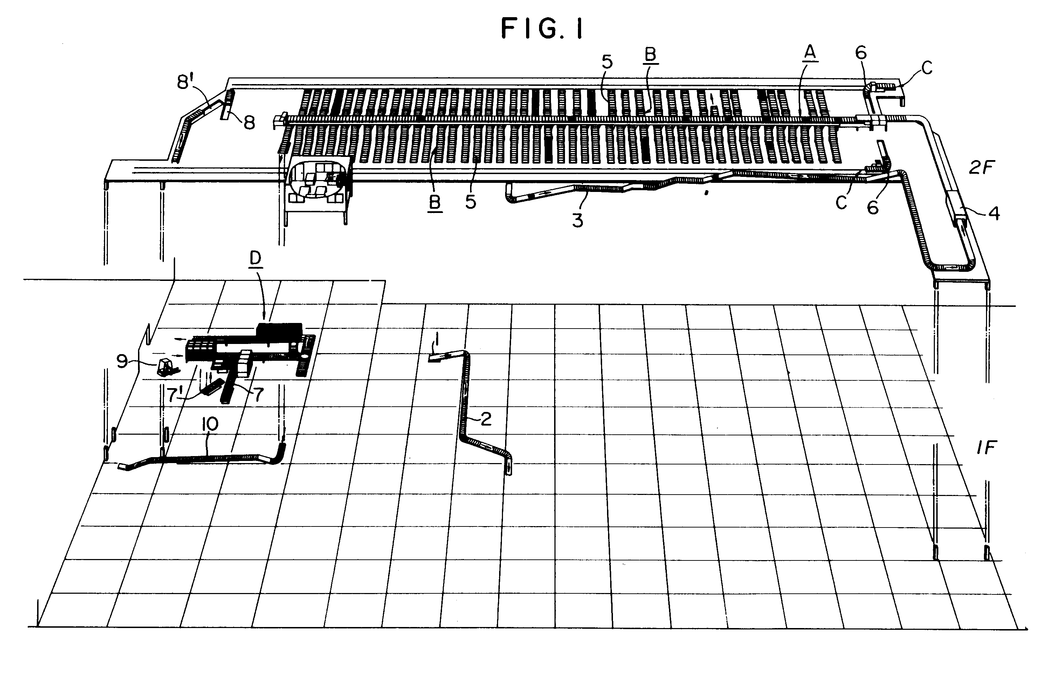

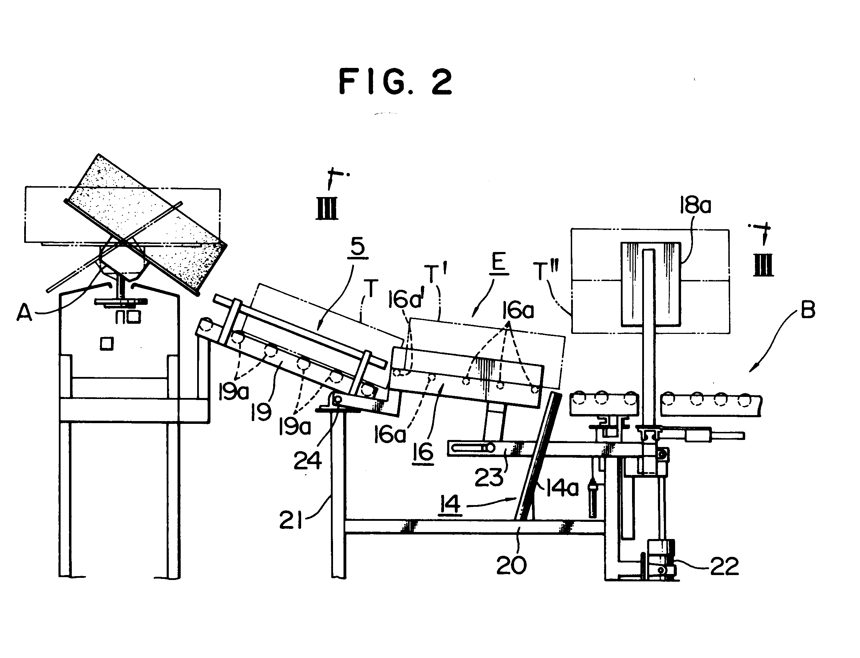

The detail of an example of the automatic tyre supplying device, which is disposed between the sorting device A and the stacking device B, is shown in Figs. 2 to 4.

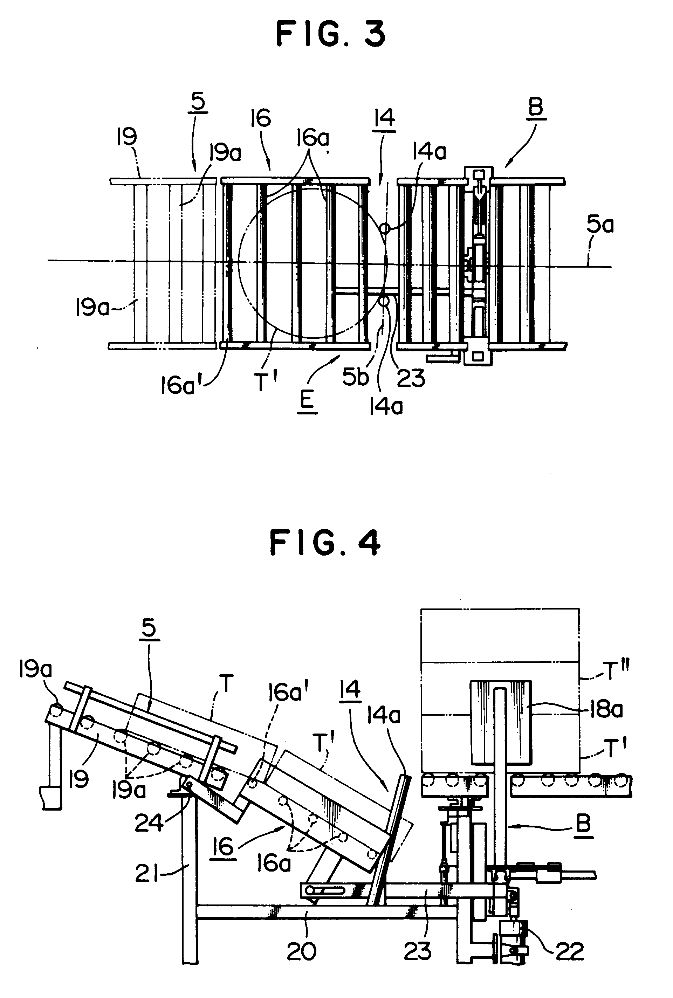

This automatic tyre supplying device, represented by a symbol E, has a stationary stopper portion l4 for stopping the tyres T on the sorting line 5, and a movable conveyor l6 which constitutes a part of the sorting line 5. As will be seen from Figs. 2 and 4, the movable conveyor l6 is adapted to move along the stationary stopper portion l4 between a position where it causes the tyre T to be stopped by the stopper portion l4 and a position where it can deliver the stopped tyre T'.

In this embodiment, the sorting line 5 is installed at an inclination so as to extend between the tyre sorting device A and the tyre stacking device B which is installed at a level below that of the sorting device A. The sorting line 5 is constituted by a chute 19 and the movable conveyor 16 which are provided with free rollers 19a and 16a, respectively.

The stationary stopper portion 14 is constituted by a pair of stopper bars 14a, 14a which are extended upward and fixed to the installation base 20 of the sorting line 5 in such a manner as to incline towards the downstream side as viewed in the direction of flow or convey of the tyres, as will be seen from Figs. 2 and 3.

To positions at which the stopper bars 14a, 14a are fixed are the positions where they can automatically center the tyre T which has stopped by these stopper bars 14a, 14a. More specifically, the stopper bars 14a, 14a are positioned on both sides of the longitudinal axis 5a of the sorting line 5 at an equal distance from the axis 5a and on a line 5b which is perpendicular to the axis 5a.

The movable conveyor 16 is pivotally secured at its end adjacent to the sorting device A to the supporting portion 21 for supporting the chute 19, while the other end of the movable conveyor 16, i.e., the end adjacent to the stacking device B, is pivotally connected to an interlocking bar 23 which is provided on a driving device 22 for driving the tyre clamping portion 18a of the stacking device B and movable together with the driving device 22. Thus, the movable conveyor 16 is swingable along the stopper bars 14a about the axis of pivotal connection 24 to the supporting portion 21, as will be understood from Fig. 3.

When the movable conveyor l6 is in the lower end of its stroke, the upper ends of the free rollers l6a on the movable conveyor l6 form an inclined surface substantially flush with the inclined surface presented by the free rollers l9a on the chute l9, and the stationary stopper portion l4 is located on the extension of the inclined surface presented by the free rollers l6a.

When the movable conveyor l6 is in the upper end of its stroke, the extension of the surface presented by the upper ends of the free rollers l6a assumes a level above the upper ends of the stopper bars l4a of the stationary stopper portion l4. In this state, the movable conveyor l6 is so inclined that the free roller l6a' adjacent to the sorting device A takes a level above the level of the free roller l9a of the chute l9 adjacent to the stacking device B. Thus, the movable conveyor l6 is still inclined towards the stacking device B even in this state, so that the tyre on the movable conveyor l6 is moved towards the stacking device B by the force of gravity, as will be seen from Fig. 2.

The automatic tyre supplying device E having the described construction is adapted to supply, in a one-by-one fashion, the conveyed tyres T in a manner which will be explained hereinafter.

The tyre T coming from the sorting device A is transferred to the chute l9 and then to the movable conveyor 16. The movement of the tyre on the chute 19 and the movable conveyor 16 is possible because the tyre can freely roll on the free rollers 19a, 16a by the force of gravity. Meanwhile, as shown in Fig. 4, the movable conveyor 16 is in the lower stroke end of its swinging motion.

When the stopping of the tyre T' by the stopper bars 14a, 14a is confirmed, the driving device 22 is activated to swing the movable conveyor 16 to the upper position. Meanwhile, the tyre T' is held in contact with the stopper bars 14a, 14a, as shown in Fig. 2.

When the movable conveyor 16 has been swung to the upper end of its swinging stroke, the tyre T' takes a position higher than the upper end of the stopper bars 14a, 14a so that it slides towards the stacking device B by the force of gravity. Meanwhile, the preceding tyre T", which has reached the stacking device B, has been clamped by the calmping portion 18a and has been lifted by the driving device 22, so that the succeeding tyre T' can slide into the position which has been occupied by the preceding tyre T".

After the tyre T' has been sent to the stacking device B, the driving device 22 is activated to swing the movable conveyor to the lower end of its swinging stroke. As a result, the tyre T" which has been raised by the clamping portion 18a is placed and stacked on the tyre T', as will be seen from Fig. 4.

A new tyre T is then supplied after the movable conveyor 16′ has been swung to the lower stroke end thereof. The tyre T has been stopped as it contacts the tyre T′ when the movable conveyor 16 is in its lower end of the stroke. After the swinging of the movable conveyor 16 to the upper stroke end, the new tyre T has been stopped as it contacts the free roller 16a′ of the movable conveyor 16 adjacent to the sorting device A. When the movable conveyor 16 has been swung to its lower stroke end, the tyre T is released from the free roller 16a′ so that it moves onto the movable conveyor 16 by the force of gravity.

When this new tyre T moved onto the movable conveyor 16 is stopped upon contact with the stopper bars 14a, 14a of the stationary stopper portion 14, the movable conveyor 16 is swung upward so that the new tyre T is delivered to the stacking device B.

This operation is cyclically repeated so that the tyres T are supplied in one-by-one fashion to the next section which is, in this case, the stacking device B of the tyre handling system.

The described construction of the stationary stopper portion is only illustrative and various other constructions can be used provided that they can stop the tyre on the sorting line while automatically centering the same.

The described construction of the movable conveyor also is not exclusive. Thus, the movable conveyor can have any suitable construction which is movable along the stationary stopper portion between the position where the conveyed tyre is stopped by the stationary stopper portion and a position where it can deliver the tyre and which is capable of contacting a new tyre on the sorting line when in the tyre delivery position.

The automatic tyre supplying device having the described construction offers the following advantages.

(l) The movable conveyor is installed as a part of the sorting conveyor line, in such a manner as to be able to move between a position where it causes the conveyed tyre on the sorting conveyor to be stopped by the stopper portion and a position where it can deliver the stopped tyre and also in such a manner as to be able to contact, when it is in the delivery position, a new tyre on the sorting conveyor.

Conventionally, the stopping of successive tyres and the delivery of the stopped tyre are conducted by independent devices and complicated control is required for operating these devices in a timed relation. In contrast, the tyre supplying device of the described embodiment can supply, in one-by-one fashion, the tyres which have been successively conveyed by the sorting conveyor without any clearance between adjacent tyres, to the next section of the tyre handling system. Since the movable conveyor of the tyre supplying device is constructed as a part of the sorting conveyor, the space which would be required by the conventional system for the installation of independent devices for stopping and delivery of the tyres, as well as complicated control system for controlling the operation of such devices, are dispensed with.

(2) The stationary tyre stopping section is capable of automatically centering the tyre when it stops the tyre. In addition, the movable conveyor is adapted to move along the stationary stopper portion. It is, therefore, possible to move the stopped tyre to the delivery position while the tyre is held in contact with the stationary stopper portion, i.e., while the tyre is in the centered state.

It is, therefore, possible to effect the stopping of the tyre and the supply of the stopped tyre in one-by-one fashion, while correctly centering the tyre.

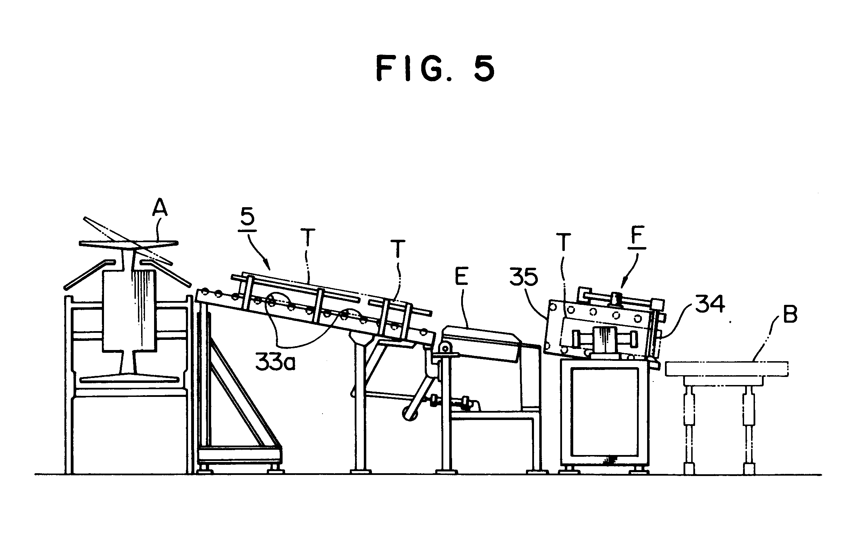

The sorting line 5 which is used for tyres having white side walls on their one sides are provided with an automatic tyre inverting device F disposed between the automatic tyre supplying device E described above and the tyre stacking device B. The detail of an example of the automatic tyre inverting device is shown in Figs. 5 to 9.

The automatic tyre inverting device F is constituted mainly by a stopper portion 34 which is adapted to be opened and closed in the sorting line 5 for the tyres T, and an inverting portion 35 on which the stopper portion 34 is provided. The automatic tyre inverting device F is installed on a portion of the sorting line 5 upstream of the tyre stacking device B, as will be best seen from Fig. 5. In this Figure, symbol A represents a sorting device, while E represents an automatic tyre supplying device which is capable of supplying tyres in a one-by-one fashion. The sorting device A and the supplying device E are provided along each sorting line 5.

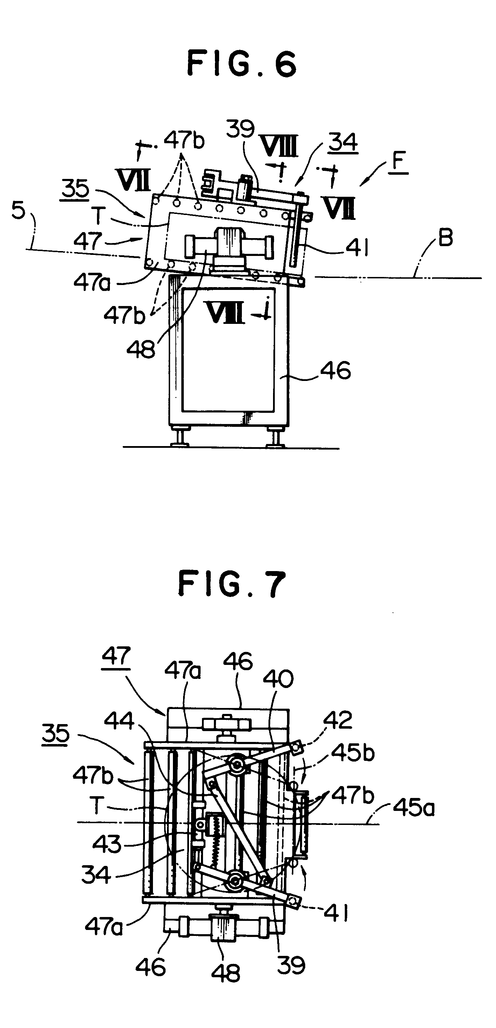

As will be seen from Figs. 6 to 8, the stopper portion 34 includes a pair of stopper bars 4l, 42 suspended downward from the lower ends of two rocker arms 39, 40, a driving portion 43 for driving one of the rocker arms 39, and a connecting arm 44. The connecting arm 44 is pivotally connected to the end of the rocker arm 39 adjacent to the stopper bar 4l and the end of the rocker arm 40 remote from the stopper bar 42.

The stopper bars 4l and 42 are movable between an open state in which they are stationed on both sides of the sorting line 5 so as to form therebetween a clearance which is large enough to permit the tyre T to pass therethrough, and a close state in which they are brought together to positions where they contact and stop the tyre T conveyed along the sorting line 5. Usually, the stopper bars 4l, 42 are stationed on both sides of the sorting line 5, i.e., in the open state.

It is, therefore, possible to stop the tyre T by moving both stopper bars 4l and 42 to the closing position. Preferably, the arrangement is such that, when both stopper bars 4l, 42 are in the closing positions, they are located on both sides of the axis 45a of the stacking device B at an equal distance from the axis 45a and on a line 45b which is perpendicular to the axis 45a. With such an arrangement, it is possible to automatically center the tyre T with respect to the stacking device B.

The inverting portion 35 has a container portion 47 having the stopper portion 34 and journaled to a stationary frame 46 in such a manner as to be able to invert the tyre T while the tyre T is held in contact with the stopper bars 4l, 42, and a rotary driving section 48 capable of rotating the container portion 47.

The container portion 47 includes a pair of side walls 47a, 47a which are disposed at an equal distance from the sorting line 5 and a plurality of free rollers 47b which are disposed between the upper ends, as well as between the lower ends, of the side walls 47a, 47a. The free rollers 47a are similar to the free rollers 33a on the sorting line 5. Thus, the side walls 48a, 48a and the free rollers 47b, 47b in combination constitute a substantially rectangular cross-section of the container portion 47.

The rocker arms 39 and 40 are rockably secured at their substantially mid portions to the upper end surfaces of the side walls 47a, 47a, so that the opening and closing action of the stopper bars 4l, 42 is conducted at a position immediately downstream of the end of the container portion 47 adjacent to the stacking device B.

When tyres having white side walls on their one side are delivered to the sorting line 5, the automatic tyre inverting device F operates in a manner which will be explained hereinafter.

The tyres T from the sorting device A are delivered to the sorting line 5 which extends obliquely downwardly from the sorting device A to the stacking device B which is positioned at a level below the level of the sorting device A and which has free rollers 33. Meanwhile, the container portion 47 which constitutes the inverting portion 35 of the automatic tyre inverting device F is stationed by the rotary driving device 48 at such an inclination that the inclined surface presented by the free rollers 47b thereon is flush with the inclined surface presented by the free rollers 33a on the sorting line 5.

The tyres delivered to the sorting line 5 are fed to the automatic tyre supplying device E which supplies, in a one-by-one fashion, the tyres T to the container portion 47 which constitutes the inverting portion 35 of the automatic inverting device F. The operation down to this step will be understood when the description is read in conjunction with Fig. 5.

Then, a judgement is conducted as to whether the tyre has a white side wall in its obverse or reverse side. The judgement is conducted by means of, for example, bar codes attached to the tyres. In accordance with the result of the judgement, a decision is made as to whether the stopper bars 4l, 42 are to be moved to the closing position or whether the same should be held in the open state.

If a tyre T having a white side wall on its obverse side has been passed, the next tyre T′ has to be delivered in such a manner that its white side wall is directed downward, in order to prevent any contamination of the white side wall of the preceding tyre, by the black side wall of the succeeding tyre.

This means that, if the tyres having white side walls and the tyres having black side walls are conveyed alternatingly, it is not necessary to invert the tyres so that the stopper bars 4l, 42 of the stopper portion 34 are kept in the open state to pass these tyres.

When the new tyre T′ is oriented in the same direction as the preceding tyre T, e.g., when both the preceding tyre T and the new tyre T′ are

placed with their white side walls directed upward, the driving portion 43 drives the stopper bars 4l, 42 of the stopper portion 34 to the close position so as to stop the new tyre T′ and to receive the stopped tyre T′ in the container portion 47 of the inverting section 35, as will be seen from Fig. 7.

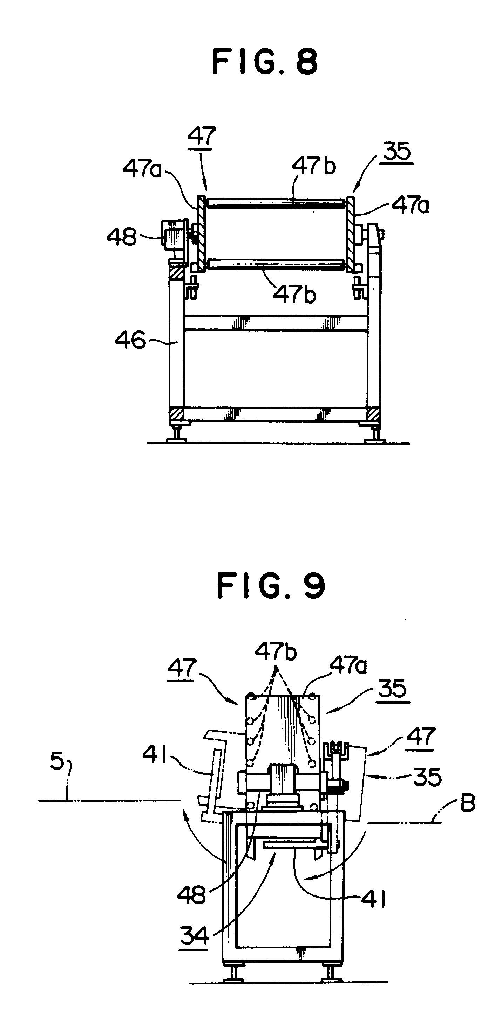

Then, the rotary driving portion 48 is operated to turn the container portion 47 upside down, i.e., l80° with the tyre T′ held in contact with the stopper bars 4l, 42, so that the white side wall of the new tyre T′ is directed downward. The new tyre T is then conveyed to the next section of the tyre handling system, i.e., the stacking device B in this case. This operation will be understood when the description is read in conjunction with Fig. 9.

The movement of the tyres T is effected by the force of gravity, as the tyre T can roll on the free rollers 33a, 47b on the sorting line 5 and the container portion 47 of the inverting portion 35 which are held at an inclination. Similarly, the contact of the tyre with the stopper bars 4l, 42 is effected by the force of gravity.

As will be understood from the foregoing description, with the automatic tyre inverting device of the present invention, it is possible to selectively invert the tyres T, T′ such that a tyre T′ having the side wall directed upward comes next to the tyre T which is oriented to direct its black side wall upward. In consequence, the stacking device B can stack successive tyres such that the same sides of the adjacent tyres, e.g., the sides with white side walls, are held in contact with each other.

The described constructions of the stopper portion and the inverting portion of the automatic tyre inverting device are only illustrative. Namely, any other suitable construction can be adopted provided that it has a stopper portion capable of stopping tyres successively conveyed along the sorting line and a tyre inverting portion which is capable of inverting the tyre while keeping the tyre in contact with the stopper portion.

The automatic tyre inverting device having the described embodiment offers the following advantages.

(l) The automatic tyre inverting device enables the tyres to be conveyed with their white side walls directed upward or downward as desired, thus eliminating the necessity for the manual labour which heretofore has been necessary to stack the tyres such that the same sides of the adjacent tyres, e.g., white side walls, held in contact with each other. Hitherto, when tyres with white side walls are sent to the stacking section, it has been necessary that the workers selectively invert the tyres in such a manner that the alternating tyres exhibit the same sides directed upward, i.e., in such a manner that when a tyre is sent with its white side wall directed upward, the next tyre is sent with its white side directed downward. According to the described embodiment, it is possible to eliminate all such manual works, and to effect such selective inversion of the tyres fully automatically and without fail.

This in turn enables the stacking device to merely stack the successive tyres, so that it is possible to easily automate the stacking operation which is conducted by the stacking device and the efficiency is greatly improved, even when the tyres have white side walls which are strictly required not to be contaminated.

(2) The automatic tyre inverting device has a simple construction composed of a stopper portion which is disposed on the sorting line and adapted for selectively open and close the passage for the tyres, and an inverting portion capable of accommodating the tyre and inverting the same. The stopper portion in the close state is capable of stopping the tyre on the sorting line and inverting the tyre upside down while the tyre is held in contact with the stopper portion. It is advantageous that this simple arrangement ensures that the tyres delivered to the stack device is inverted in such a manner that the tyres with their white side walls directed upward appear alternatingly.

Another advantage is that, by arranging such that the tyre stopped by the stopper portion is centered by the stopper portion with respect to the stacking device, it is possible to keep the tyre precisely in alignment with the stacking device, because the tyre is held in contact with the stopper portion even during the inversion.

Furthermore, since the tyre is inverted while it is held in contact with the stopper portion, it is not necessary to provide any specific means for fixing the tyre to the inverting section during the inverting operation.

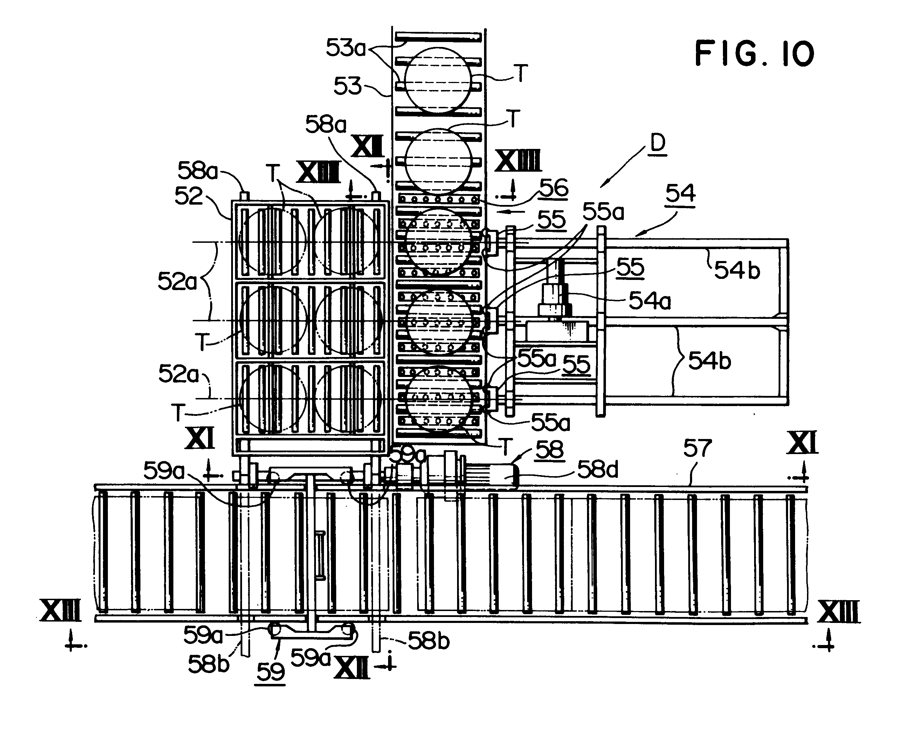

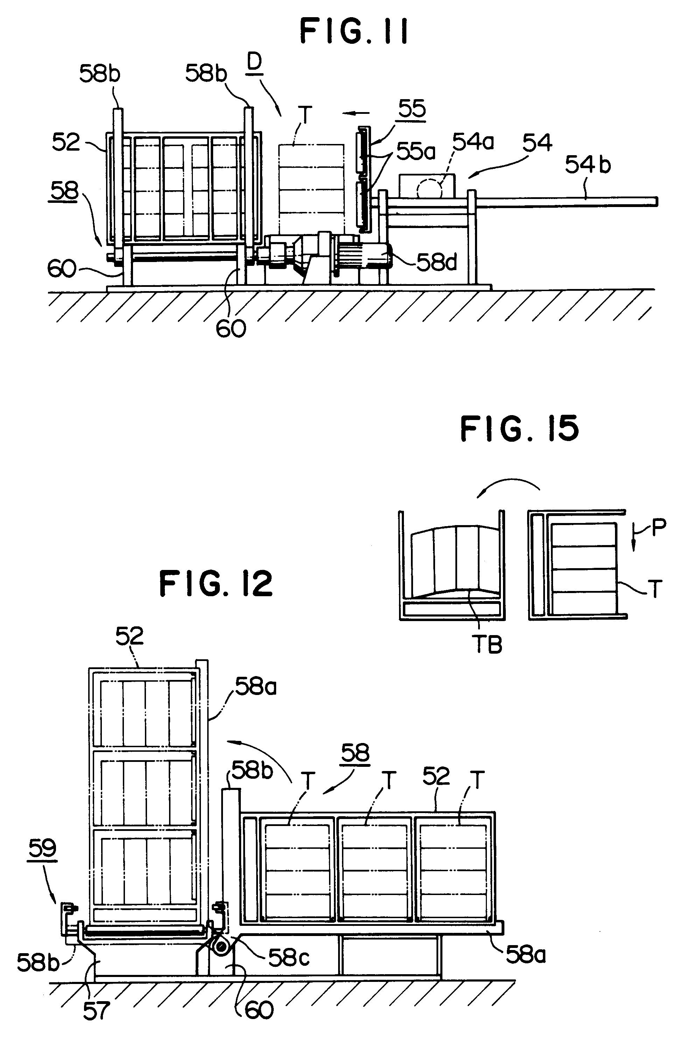

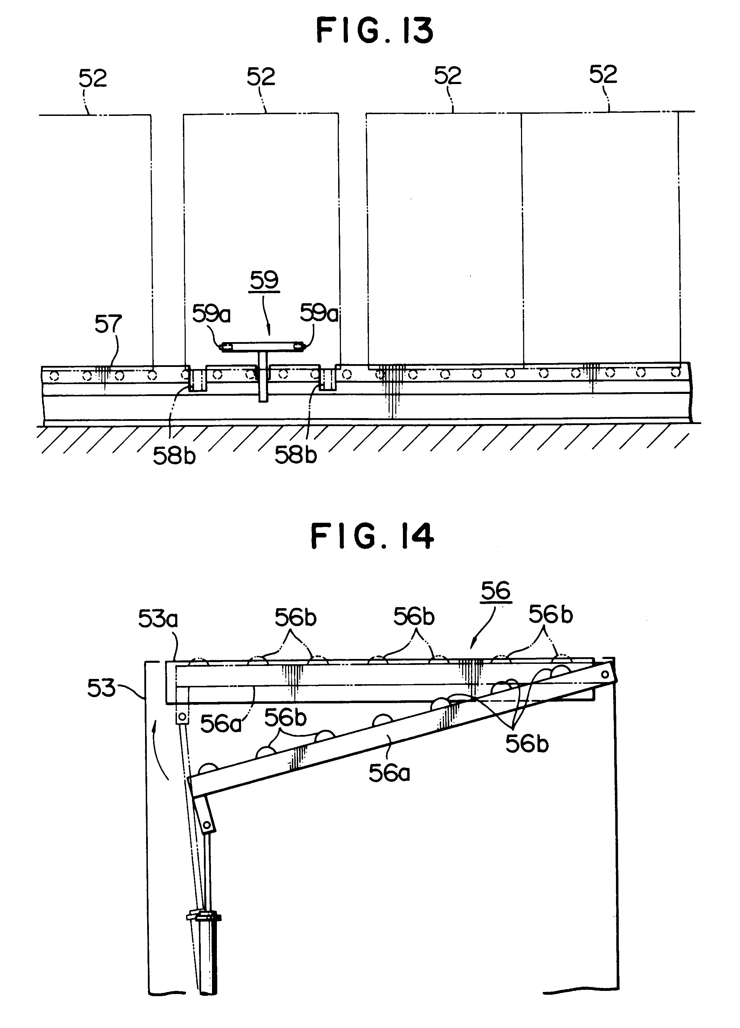

Figs. 10 to 14 in combination show the detail of an example of the shelling device D incorporated in the tyre handling system of the invention.

The tyre shelving device D has a tyre receiving conveyor 53 for conveying a stack of tyres T to a position where a frame pallet 52 is stationed, a pushing portion 54 which pushes the stack of tyres T on the tyre receiving conveyor into the frame pallet 52, an automatic centering device 55 provided on the pushing portion 54 and adapted to automatically eliminate any offset of the tyres T of the stack when the stack is pushed into the frame pallet 52, a flotating portion 56 adapted for flotating the stack of tyres T slightly above the level of the tyre receiving conveyor 53 so as to enable the stack to move freely in any direction when the stack is pushed onto the pallet, a pallet tilting portion 58 adapted for tilting the frame pallet 52 carrying the stack of tyres T by 90° so as to transfer the tyres onto a conveyor line 57, and a pallet sliding portion 59 for causing the pallet on the conveyor line 57 to slide thereby preventing any bridging phenomenon exhibited by the tyres shelved in the frame pallet.

As will be seen from Figs. 10 to 12, the frame pallet 52 is placed with its one lateral side directed downward, on tilting arms 58a of the tilting portion 58, the tilting arms 58a being disposed in a side-by-side fashion to the tyre receiving conveyor 53 and will be explained later in more detail.

The pushing portion 54 has pushing rods 54b which are adapted to be selectively extended into a space above the tyre receiving conveyor 53 by the operation of an actuator 54a so that, when the pushing rods 54b are extended, the ends of these rods 54b contact and push the stack of the tyres T so as to forcibly move the same into a vacant pallet 52. In the described embodiment, the pushing portion 54 employs three pushing rods 54b which are arranged to project along the axes 52a of storage of three vacant pallets 52 so that three stacks of tyres T are pushed at once. An automatic centering portion 55 is provided on the distal end of each pushing rod 54b so as to be able to contact the stack of tyres T when the pushing rod 54b is extended. The automatic centering portion 55 includes a pair of tyre contacting rollers 55a, 55a which are disposed on both sides of the axis 52a of storage of each pallet 52 at an equal distance from the axis 52a and on a line which is perpendicular to the axis 52a. The tyre contacting rollers 55a have their axes extended in the direction of stack of tyres. In the illustrated embodiment, each tyre contacting rollers 55a has an upper section and a lower section so that it can contact a plurality of tyres of each stack.

The arrangement of the tyre contacting rollers 55a enables the stack of tyres to be automatically centered with respect to the axis 52a of storage in the pallet 52 when the stack is forcibly moved into the pallet 52 by the action of the pushing rod 54b of the pushing portion 54. During this automatic centering operation, the stack of tyres T is flotated by the operation of the flotating portion 56 so as to be movable freely in any direction. The pushing and centering operation will be understood when the description is read in conjunction with Figs. l0 and II.

As will be seen from Figs. l0 and l4, the flotating portion 56 has swingable bases 56a which are swingably disposed between adjacent rollers 53a, 53a of each tyre receiving conveyor 53, and a plurality of free balls 56b which are arranged along the length of each swingable base 56a. A plurality of flotating portion 56 are disposed so as to confront respective pallets 52. The arrangement is such that the swingable bases 56a swing in synchronism and, when the swingable bases 56a have swung to the upper end of their swinging stroke, the free balls 56b slightly project to a level above the upper surface of the tyre receiving conveyor 53 so as to constitute a ball conveyor. In this state, the stack of the tyres T is carried by the ball conveyor rather than by the tyre receiving conveyor. In other words, the stack of tyres T slightly floats above the level of the tyre receiving conveyor so as to be able to move in any direction thanks to the rolling contact with the free balls 56b. Needless to say, the free balls 56 bare retracted below the surface of the tyre receiving conveyor 53 when the stacks of tyre T are being conveyed by the tyre receiving conveyors 53.

The pallet tilting portion 58 has a pair of L-shaped arms each including a tilting arm 58a and a tilting arm 58b.The L-shaped arm is adapted to pivot in a vertical plane about the bent portion 58c where both tilting arms 58a and 58b are integrated with each other, by the action of a tilting driving device 58d. More specifically, the L-shaped arm is swingably supported at its bent portion 58c by a bearing 60 which is disposed between the tyre receiving conveyor 53 and the conveyor line 57, as will be understood from Figs. l0 and l2.

In the described embodiment, the conveyor line 57 is arranged so as to convey the tyres in a direction perpendicular to the direction of convey by the tyre receiving conveyor 53, and is disposed at the downstream end of the tyre receiving conveyor 53. Therefore, the tilting arms 58a first carry the frame pallets 52 which have been turned sideways and then rotate from the position where the arms 58a lay at one side of the tyre receiving conveyor 53 to a position where they are positioned at one side of the conveyor line 57.

A pallet sliding portion 59 is disposed at a position where the pallets 52 are placed on the conveyor line 57. The pallet sliding portion 59 has contact rollers 59a capable of contacting side surfaces of the pallets 52 and slide driving portion 59b which are adapted to move the contact rollers 59a in direction perpendicular to the direction of convey of the conveyor line 57. Thus, the frame pallets 52 are slided as they are pushed by the contact rollers 59a. In the illustrated embodiment, the contact rollers 59a are disposed on both sides of the conveyor line 57 such that the pallets can be clamped between the contact rollers 59a, as will be seen from Figs. l0, l2 and l3.

The shelving operation of the shelving device D having the described construction is conducted in a manner which will be explained hereinunder.

The tyre receiving conveyor 53 operates to bring the stacks of tyres T to positions where they confront pallets 52 which have been turned upside down and placed on the tilting arms 58a of the pallet tilting portion 58. In this state, the tyre receiving conveyor 53 is stopped and the stacks of the tyres on the conveyor 53 can be forced into the vacant pallets 52 by the action of the pushing portion 54.

Then, the pushing portion 54 operates to extend its pushing rods 54b so as to force the stacks of tyres T on the receiving conveyor 53 onto the pallets 52. This operation is conducted twice so that six stacks, three stacks in each operation, are forced into the pallets 52.

During the pushing of the stacks by the pushing device 54, the automatic centering portions 55 on the pushing rods 54b serve to automatically center the stacks of tyres T with respect to the axes of storage in respective pallets 52. Meanwhile, the floating portion 56 slightly lifts the stacks of tyres T so that the latter float above the surface of the tyre receiving conveyor 53.

After the stacks of tyres T have been received in the respective pallets 52, the driving portion 58d of the pallet tilting portion 58 is activated so that the frame pallets 52 are turned upright while being supported by the tilting arms 58a, 58b, so as to be placed on the conveyor line 57.

The pallets 52 now placed on the conveyor line 57 are then slid by the operation of the pallet sliding portion 59. This sliding operation is intended for the following purpose. Referring to Fig. l5, the tyres T held in stacked condition are tightly compressed by pressure P generated by the force of gravity. Therefore, when the tyres are shelved in the pallets and turned upright in accordance with the swinging of the pallet tilting portion 58, the tyres exhibit such a tendency that they do not rest on the bottom of the pallet but are held above the bottom as indicated by TB. This phenomenon is generally known as "bridging". In the described embodiment, since the pallets are slided, the bridging of the tyre is eliminated, thus stabilizing the shelved tyres.

As a result of the swinging of the tilting arms 58a, 58b, the tyres stacked in the pallets 52 are turned upright, and the pallets containing tyres in upright postures are delivered to the conveyor line 57, thus completing the shelving operation.

The vacant pallets 52 which are to be loaded with the stacks of tyres T are conveyed by the conveyor line 57 from the direction opposite to the direction in which the pallets 52 with the shelved tyres are conveyed by the same conveyor line 57. The vacant pallets, upon arriving at the position where the pallet tilting portion 58 is provided, are turned sideways by the action of the pallet tilting portion 58 so as to be set aside the tyre receiving conveyor 53. In this state, the vacant pallets are ready for receiving the stacks of tyres T which have been conveyed by the tyre receiving conveyor 53. Then, the shelving operation explained before is commenced so that the shelved pallets 52 are forwarded by the same process as that explained before.

The constructions of the pushing portion, automatic centering portion, flotating portion, pallet tilting portion and the pallet slide portions have been described only by way of example. Thus, the tyre shelving device of the invention can have any suitable construction, provided that it has a pushing portion for forcibly pushing stacks of tyres into frame pallets, automatic centering portion provide on the pushing portion and capable of automatically centering the stacks of tyres while the pushing portion pushes the stacks of tyres, a flotating portion which causes the stacks of tyres to slightly float above the surface of the tyre receiving conveyor during the pushing so as to allow the stacks of tyres to freely move in any direction, a pallet tilting portion capable of performing 90° tilting motion of the pallets loaded with the stacks of tyres so as to place the pallets on the conveyor line, and a pallet sliding portion which causes the pallets on the conveyor line to slide thereby eliminating any tendency of bridging of tyres in the pallets.

The following advantages are brought about by the tyre shelving device described hereinbefore.

(l) Stacks of tyres on the tyre receiving conveyor can be automatically shelved into the frame pallets simply by being pushed by the pushing portion. Since the shelving can be conducted by a mere pushing action, it is possible to shelve the tyres fully automatically without requiring any complicated shelving apparatus.

The automatic centering portion on the end of each pushing rod of the pushing portion serves to automatically center the stacks of tyres with respect to the storage position in the pallets, so that the stacks of tyres are correctly set in the designated storage position in the pallet. This automatic centering effect is achieved by mere pushing action of the pushing rods, without necessitating any specific separate centering means.

This centering operation of the automatic centering portion can be conducted smoothly by virtue of the flotating portion which causes the stacks of the tyres to float slightly above the surface of the tyre receiving conveyor so as to be able to move freely in any direction.

(2) When the pallets loaded with the stacks of tyres are turned upright by the action of the pallet tilting portion so as to be placed on the conveyor line, the pallets are slided by the pallet sliding portion.This in turn causes the tyres in the pallets to be shaken so that they are loosened, thus eliminating the lack of stability due to bridging which is attributable to the pressure applied to the tyres when the tyres are held in stacked condition.

## Claims

1. A tyre handling system having an automatic tyre sorting device (A), a tyre stacking device (B) for stacking tyres (T), an automatic tyre supplying device (E) for automatically supplying said tyre stacking device (B) with the tyres sorted by said tyre sorting device (A), and a tyre shelving device (D) for receiving the stacks of tyre (T) and placing said stacks of tyres (T) in frame pallets (52), wherein said tyre shelving device (D) includes:

   a tyre receiving conveyor (53) for conveying said stacks of tyres (T) to a predetermined position;

   a conveyor (57) line installed in the vicinity of said predetermined position and extending in the direction transverse to said tyre receiving conveyor (53), said conveyor line (57) being adapted to convey said frame pallets (52);

   tilting means (58) adapted for carrying said pallets (52) and capable of performing a 90° tilting motion between a first position at which said pallets (52) are laid aside said predetermined position and a second position adjacent to said first position and where said pallets (52) stand upright on said conveyor line (57);

   pushing means (54) disposed to oppose said pallets (52) in said first position across said tyre receiving conveyor (53) and adapted to engage with the stacks of tyres (T) on said tyre receiving conveyor (53) so as to push said stacks of tyres (T) into said pallets (52) in said first position; and

   automatic centering means (55) provided on the portion of said pushing means (54) engageable with said stacks of tyres (T) and adapted to center said stacks of tyres (T) with respect to a predetermined central axis.

2. A tyre handling system according to Claim 1, wherein said pushing means (54) includes at least one pushing rod (54b) which is adapted to be projected and retracted across the space above said tyre receiving conveyor (53) by the action of a driving device (54a), said automatic centering means (55) being provided on the end of said pushing rod (54b) and is constituted by a pair of tyre contacting rollers (55a) which are disposed on a horizontal line perpendicular to the axis of said pushing rod (54b) on both sides of said axis at an equal distance from said axis, said tyre contacting rollers (55a) being rotatable about respective vertical axes.

3. A tyre handling system according to either one of Claims 1 and 2, wherein said tyre shelving device (D) further includes tyre flotating means (56) having a multiplicity of free balls (56b) disposed at suitable positions on said tyre receiving conveyor (53) and arranged so as to be moved up and down by a small distance.

4. A tyre handling system according to either one of Claims 1 and 2, wherein said tyre shelving device (D) further includes tyre sliding means (59) adapted to engage with said frame pallets (52) held upright on said conveyor line (57) and capable of sliding said pallets (52) in the breadthwise direction of said conveyor line within the breadth of said conveyor line (57).

5. A tyre handling system according to either one of Claims 1 and 2, wherein said tyre shelving device (D) further includes tyre flotating means (56) having a multiplicity of free balls (56b) disposed at suitable positions on said tyre receiving conveyor (53) and arranged so as to be moved up and down by a small distance, and sliding means (59) adapted to engage with said frame pallets (52) held upright on said conveyor line (57) and capable of sliding said pallets (52) in the breadthwise direction of said conveyor line (57) within the breadth of said conveyor line (57).

6. A tyre handling system according to Claim 1, wherein said tyre supplying device (E) includes a conveyor line (19) arranged along a slant plane descending towards the tyre stacking device (B), stopper means (14,14a) disposed on the end of said conveyor line adjacent to said tyre stacking device (B) and having a height suitable for stopping a tyre (T) which is being conveyed by said conveyor line (19) and a movable conveyor (16) forming a portion of said conveyor line adjacent to said tyre stacking device (B) said movable conveyor (16) having a length large enough to carry a tyre (T) thereon and movable between an upper position and a lower position with its one end moving along said stopper means (14,14a) said movable conveyor (19), when in said lower position, has said one end placed at a level below the upper end of said stopper means (14,14a) and the other end placed on said conveyor line (16) so as to enable said stopper means (14,14a) to stop a tyre (T) conveyed by said conveyor line (16) and, when in said upper position, has said one end placed at a level above said upper end or said stopper means (14,14a) so as to allow said tyre (T) to move over said upper end of said stopper means (14,14a), while the other end is positioned above said conveyor line (16) so as to stop a succeeding tyre (T).

7. A tyre handling system according to Claim 6, wherein said stopper means (14,14a) includes a pair of bars (14a) which are positioned on both sides of the neutral axis of said movable conveyor on a horizontal line perpendicular to said neutral axis at an equal distance from said neutral axis, whereby said tyres (T) on said movable conveyor (16) are automatically centered by said bars (14a).

8. A tyre handling system according to Claim 1 further having an automatic tyre inverting device (35) for automatically and selectively inverting a series of tyres (T) which have been turned sideways so as to be supplied one by one to said tyre stacking device (B) said tyre inverting device (35) including a casing (47) of a size large enough to receive a tyre (T) and disposed along said conveyor (16) line which descends towards said tyre stacking device (B), said casing (47) having an entrance and an exit which open on said conveyor line (16) and sizes large enough to enable said tyre (T) to pass therethrough, an opening and closing means for selectively opening and closing said exit, and inverting means (35) for turning said casing (47) upside down through 180° such that said entrance and said exit are reversed.

9. A tyre handling system according to Claim 8, wherein said opening and closing means includes a pair of parallel stopper bars (41,42) extending perpendicularly to the bottom of said casing (47) and movable towards and away from each other, said stopper bars (41,42) being disposed in a plane perpendicular to the neutral axis of said casing (47) at an equal distance from said neutral axis, so that the tyre (T) engaged and stopped by said stopper bars (41,42) are automatically centered by said stopper bars (41,42).

**Revendications**

1. Système de manutention de pneumatiques possédant un dispositif (A) de tri automatique des pneumatiques, un dispositif d'empilage (B) des pneumatiques, destiné à empiler des pneumatiques (P), un dispositif (E) d'approvisionnement automatique des pneumatiques destiné à approvisionner automatiquement ledit dispositif (B) d'empilage des pneumatiques en pneumatiques triés par ledit dispositif (A) de triage des pneumatiques, et un dispositif (D) de gerbage des pneumatiques destiné à recevoir les piles de pneumatiques (P) et à placer lesdites piles de pneumatiques (P) dans des palettes cadres, (52) dans lequel ledit dispositif (B) de gerbage des pneumatiques comprend :

- un transporteur (53) de réception des pneumatiques destiné à transporter lesdites piles de pneumatiques (P) jusqu'à une position prédéterminée ;
- une ligne de transport (57) installée dans le voisinage de ladite position prédéterminée et qui s'étend dans une direction transversale par rapport audit transporteur (53) de réception des pneumatiques, ladite ligne de transport (57) étant adaptée pour transporter lesdites palettes cadres (52) ;
- des moyens de basculement (58) adaptés pour transporter lesdites palettes (52) et capables d'effectuer un mouvement de basculement de 90° entre une première position, dans laquelle lesdites palettes (52) sont déposées à côté de ladite position prédéterminée, et une seconde position adjacente à ladite première position et dans laquelle lesdites palettes (52) sont placées debout sur ladite ligne de transport (57) ;
- des moyens de poussée (54) disposés en face desdites palettes (52) placées dans ladite première position, de l'autre côté dudit transporteur (53) de réception des pneumatiques, et adaptés pour coopérer avec les piles de pneumatiques (P) situées sur ledit transporteur (53) de réception des pneumatiques de manière à pousser lesdites piles de pneumatiques (P) pour les introduire dans lesdites palettes (52) placées dans ladite première position ; et
- des moyens de centrage automatique (55) prévus sur la partie desdits moyens de poussée (54) destinée à coopérer avec lesdites piles de pneumatiques (P) et adaptée pour centrer lesdites piles de pneumatiques (P) par rapport à un axe central prédéterminé.

2. Système de manutention de pneumatiques selon la revendication 1, dans lequel lesdits moyens de poussée (54) comprennent au moins une tige de poussée (54b) qui est adaptée pour être mise en extension et rétractée à travers l'espace qui surmonte le transporteur (53) de réception des pneumatiques par l'action d'un dispositif d'entraînement (54a), lesdits moyens (55) de centrage automatique étant prévus sur l'extrémité de ladite tige de poussée (54b), et étant constitués par une paire de rouleaux (55a) de contact avec les pneumatiques qui sont disposés sur une ligne horizontale perpendiculaire à l'axe de ladite tige de poussée (54b) de part et d'autre dudit axe, à égale distance dudit axe, lesdits rouleaux (55a) de contact des pneumatiques pouvant tourner autour d'axes verticaux respectifs.

3. Système de manutention de pneumatiques selon une quelconque des revendications 1 et 2, dans lequel ledit dispositif (D) de gerbage des pneumatiques comprend en outre des moyens (56) de support flottant des pneumatiques possédant une multiplicité de billes libres (56b) disposées dans des positions appropriées sur ledit transporteur (53) de réception des pneumatiques et agencées de manière à pouvoir être élevées et abaissées d'une petite distance.

4. Système de manutention de pneumatiques selon une quelconque des revendications 1 et 2, dans lequel ledit dispositif (D) de gerbage des pneumatiques comprend en outre des moyens (59) de glissement des pneumatiques adaptés pour coopérer avec lesdites palettes cadres (52) maintenues en position debout sur ladite ligne de transporteur (57) et capable de faire glisser lesdites palettes (52) dans la direction de la largeur de ladite ligne de transport dans les limites de la largeur de ladite ligne de transport (57).

5. Système de manutention de pneumatiques selon une des revendications 1 et 2, dans lequel ledit dispositif (D) de gerbage des pneumatiques comprend en outre des moyens (56) de support flottant des pneumatiques possédant une multiplicité de billes libres (56b) disposées dans des positions appropriées sur ledit transporteur (53) de réception des pneumatiques et agencées de manière à pouvoir s'élever et descendre sur une petite distance, et des moyens de glissement (59) adaptés pour coopérer avec lesdites palettes (52) maintenues debout sur ladite ligne de transport (57) et capables de faire glisser lesdites palettes (52) dans la direction de la largeur de ladite ligne de transport (57) dans les limites de la largeur de ladite ligne de transport (57).

6. Système de manutention de pneumatiques selon la revendication 1, dans lequel le dispositif (E) d'approvisionnement des pneumatiques comprend une ligne de transport (19) disposée le long d'un plan incliné qui descend vers le dispositif (B) d'empilage des pneumatiques, des moyens d'arrêt (14, 14a) disposés sur l'extrémité de ladite ligne de transport qui est adjacente audit dispositif (B) d'empilage des pneumatiques et ayant une hauteur appropriée pour arrêter un pneumatique (P) qui est transporté par ladite ligne de transport (19), et un transporteur mobile (16) formant une partie de ladite ligne de transport adjacente audit dispositif (D) d'empilage des pneumatiques, ledit transporteur mobile (16) ayant une longueur suffisamment grande pour transporter un pneumatique (P) et pouvant se déplacer entre une position supérieure et une position inférieure, sa première extrémité se déplaçant le long desdits moyens d'arrêt (14, 14a), ledit transporteur mobile (19), lorsqu'il se trouve dans ladite position inférieure, présentant ladite première extrémité placée à un niveau situé au-dessous de l'extrémité supérieure desdits moyens d'arrêt (14, 14a) et l'autre extrémité placée sur ladite ligne de transport (16), de manière à permettre auxdits moyens d'arrêt (14, 14a) d'arrêter un pneumatique (P) transporté par ladite ligne de transport, (16) tandis que, lorsqu'il est dans ladite position supérieure, il présente ladite première extrémité placée à un niveau situé au-dessus de ladite extrémité supérieure desdits moyens d'arrêt (14, 14a) de manière à permettre audit pneumatique (P) de passer au-dessus de ladite extrémité supérieure desdits moyens d'arrêt, (14, 14a) tandis que l'autre extrémité est positionnée au-dessus de ladite ligne de transport (16) de manière à arrêter un pneumatique (P) suivant.

7. Système de manutention de pneumatiques selon la revendication 6, dans lequel lesdits moyens d'arrêt (14, 14a) comprennent une paire de barres (14a) qui sont positionnées de part et d'autre de l'axe neutre dudit transporteur mobile, sur une ligne horizontale perpendiculaire audit axe neutre, à égale distance dudit axe neutre de sorte que lesdits pneumatiques (T) situés sur ledit transporteur mobile (16) sont automatiquement centrés par lesdites barres (14a).

8. Système de manutention de pneumatiques selon la revendication 1, comprenant en outre un dispositif (35) de retournement automatique des pneumatiques, servant à retourner automatiquement et sélectivement une série de pneumatiques (T) qui ont été tournés sur le côté de manière qu'il soit approvisionné un à un audit dispositif (B) d'empilement des pneumatiques, ledit dispositif (35) de retournement des pneumatiques comprenant un conteneur (47) d'une dimension suffisamment grande pour recevoir un pneumatique (T) et disposé le long de ladite ligne de transport (16) qui descend vers ledit dispositif (B) d'empilement des pneumatiques, ledit conteneur (47) ayant une entrée et une sortie qui débouchent sur ladite ligne de transport (16) et ayant des dimensions suffisamment grandes pour permettre le passage dudit pneumatique (T), des moyens d'ouverture et de fermeture destinés à ouvrir et fermer sélectivement ladite sortie, et des moyens (35) de retournement destinés à retourner ledit conteneur (47) de 180°, de haut en bas, de telle manière que ladite entrée et ladite sortie soient inversées.

9. Système de manutention de pneumatiques selon la revendication 8, dans lequel lesdits moyens d'ouverture et de fermeture comprennent une paire de barres d'arrêt parallèles (41, 42) qui s'étendent perpendiculairement au fond dudit conteneur (47) et peuvent se rapporcher et s'éloigner l'une de l'autre, lesdites barres d'arrêt (41, 42) étant disposées dans un plan perpendiculaire à l'axe neutre dudit logement (47), à égale distance dudit axe neutre, de sorte que les pneumatiques (T) attaqués et arrêtés par lesdites barres d'arrêt (41, 42) sont automatiquement centrés par lesdites barres d'arrêt (41, 42).

**Patentansprüche**

1. Reifen-Handhabungssystem mit einer automatischen Reifensortiervorrichtung (A), einer Reifenstapelvorrichtung (B) zum Stapeln von Reifen (T), einer automatischen Reifenzuführvorrichtung (E) zum automatischen Beschicken der Reifenstapelvorrichtung (B) mit durch die Reifensortiervorrichtung (A) sortierten Reifen und einer Reifenfachablegevorrichtung (D) zum Abnehmen der Stapel der Reifen (T) und zum Ablegen derselben in Rahmenpaletten (52), wobei die Reifenfachablegevorrichtung (D) umfaßt:
einen Reifenabnahmeförderer (53) zum Befördern der Stapel der Reifen (T) zu einer vorbestimmten Stelle, eine im Bereich der vorbestimmten Stelle installierte und sich in der Richtung quer zum Reifenabnahmeförderer (53) erstreckende Förderstraße (57), welche die Rahmenpaletten (52) zu befördern vermag, eine Kippeinrichtung (58), welche die Paletten zu führen vermag und eine 90°-Kippbewegung zwischen einer ersten Stellung, in welcher die Paletten (52) an der Seite der vorbestimmten Stelle abgelegt sind, und einer zweiten, neben der ersten Stellung befindlichen Stellung, in welcher die Paletten (52) aufrecht auf der Förderstraße (57) stehen, auszuführen vermag,
eine den Paletten (52) in der ersten Stellung über den Reifenabnahmeförderer (53) hinweg gegenüberstehend angeordnete Schubeinrichtung (54), welche an den Stapeln der Reifen (T) auf dem Reifenabnahmeförderer (53) anzugreifen vermag, um die Stapel der Reifen (T) in die Paletten (52) in der(en) ersten (erster) Stellung zu schieben, und
eine an dem an den Stapeln der Reifen (T) angreifenden Abschnitt der Schubeinrichtung (54) vorgesehene automatische Zentriereinrichtung (55), welche die Stapel der Reifen (T) in bezug auf eine vorbestimmte Mittenachse zu zentrieren vermag.

2. Reifen-Handhabungssystem nach Anspruch 1, dadurch gekennzeichnet, daß die Schubeinrichtung (54) mindestens eine Schubstange (54b) aufweist, die unter der Wirkung einer Antriebsvorrichtung (54a) quer über den Raum über dem Reifenabnahmeförderer (53) vorschieb- und zurückziehbar ist, (und) die automatische Zentriereinrichtung (55) am Ende der Schubstange (54b) vorgesehen und durch zwei Reifenkontaktierrollen (55a) gebildet ist, die auf einer waagerechten Linie senkrecht zur Achse der Schubstange (54b) auf beiden Seiten dieser Achse mit gleichem Abstand von dieser Achse angeordnet sind, wobei die Reifenkontaktierrollen (55a) um jeweilige lotrechte Achsen drehbar sind.

3. Reifen-Handhabungssystem nach einem der Ansprüche 1 und 2, dadurch gekennzeichnet, daß die Reifenfachablegevorrichtung (D) ferner eine Reifenflotiereinrichtung (56) mit einer Vielzahl von freien Kugeln (56b) aufweist, die in zweckmäßigen Stellungen am Reifenabnahmeförderer (53) vorgesehen und so angeordnet sind, daß sie über eine kleine Strecke aufwärts und abwärts bewegbar sind.

4. Reifen-Handhabungssystem nach einem der Ansprüche 1 und 2, dadurch gekennzeichnet, daß die Reifenfachablegevorrichtung (D) ferner eine Reifenverschiebeeinrichtung (59) aufweist, die an den auf der Förderstraße (57) in aufrechter Stellung gehaltenen Rahmenpaletten (52) anzugreifen und diese Paletten (52) in Breitenrichtung der Förderstraße (57) innerhalb der Breite derselben zu verschieben vermag.

5. Reifen-Handhabungssystem nach einem der Ansprüche 1 und 2, dadurch gekennzeichnet, daß die Reifenfachablegevorrichtung (D) ferner eine Reifenflotiereinrichtung (56) mit einer Vielzahl von freien Kugeln (56b), die in zweckmäßigen Stellungen am Reifenabnahmeförderer (53) vorgesehen und so angeordnet sind, daß sie über eine kleine Strecke aufwärts und abwärts bewegbar sind, und eine Verschiebeeinrichtung (59) aufweist, die an den auf der Förderstraße (57) in aufrechter Stellung gehaltenen Rahmenpaletten (52) anzugreifen und diese Paletten (52) in Breitenrichtung der Förderstraße (57) innerhalb der Breite derselben zu verschieben vermag.

6. Reifen-Handhabungssystem nach Anspruch 1, dadurch gekennzeichnet, daß die Reifenzuführvorrichtung (E) eine Förderstraße (19), die längs einer geneigten, zur Reifenstapelvorrichtung (B) abfallenden Ebene angeordnet ist, am Ende der Förderstraße neben der Reifenstapelvorrichtung (B) angeordnete Anschlagmittel (14, 14a) einer geeigneten Höhe zum Anhalten eines durch die Förderstraße (19) geförderten Reifens (T) und einen einen Abschnitt der Förderstraße neben der Reifenstapelvorrichtung (B) bildenden bewegbaren Förderer (16) aufweist, der bewegbare Förderer (16) eine ausreichend große Länge aufweist, um einen Reifen (T) darauf zu tragen, und zwischen einer oberen Stellung und einer unteren Stellung bewegbar ist, wobei sich sein eines Ende längs der Anschlagmittel (14, 14a) bewegt, der bewegbare Förderer (19), wenn er sich in der unteren Stellung befindet, mit dem einen Ende in einer Höhe(nlage) unter dem oberen Ende der Anschlagmittel (14, 14a) liegt, während sein anderes Ende auf der Förderstraße (16) liegt, so daß die Anschlagmittel (14, 14) einen durch die (auf der) Förderstraße (16) transportierten Reifen (T) anhalten können, und dann, wenn er sich in der oberen Stellung befindet, sein eines Ende in einer Höhe über dem oberen Ende der Anschlagmittel (14, 14a) liegt, so daß sich der Reifen (T) über das obere Ende der Anschlagmittel (14, 14a) hinweg bewegen kann, während das andere Ende zum Anhalten eines nachfolgenden Reifens (T) über der Förderstraße (16) positioniert ist.

7. Reifen-Handhabungssystem nach Anspruch 1, dadurch gekennzeichnet, daß die Anschlagmittel (14, 14a) zwei Stangen (14a) umfassen, die auf beiden Seiten der Neutralachse des bewegbaren Förderers auf einer waagerechten Linie senkrecht zur Neutralachse in gleichem Abstand von der Neutralachse angeordnet sind, so daß die Reifen (T) auf dem bewegbaren Förderer (16) durch die Stangen (14a) automatisch zentriert werden.

8. Reifen-Handhabungssystem nach Anspruch 1, weiterhin umfassend eine automatische Reifenwendevorrichtung (35) zum automatischen und selektiven Umdrehen bzw. Wenden einer Reihe von Reifen (T), die seitwärts gedreht worden sind, um jeweils einzeln der Reifenstapelvorrichtung (B) zugeführt zu werden, wobei die Reifenwendevorrichtung (35) ein Gehäuse (47) aufweist, das eine zum Aufnehmen eines Reifens (T) ausreichende Größe besitzt und längs der Förderstraße (16) angeordnet ist, die zur Reifenstapelvorrichtung (B) hin abfällt, wobei das Gehäuse (47) einen Einlaß und einen Auslaß aufweist, die auf der Förderstraße (16) offen und ausreichend groß sind, um einen Durchlauf des Reifens (T) durch sie hindurch zuzulassen, (ferner umfassend) eine Öffnungs- und Schließeinrichtung zum selektiven Öffnen und Schließen des Auslasses sowie eine Wendeeinrichtung (35) zum Umdrehen des Gehäuses (47) um 180° mit der Oberseite nach unten, so daß Einlaß und Auslaß umgekehrt angeordnet sind.

9. Reifen-Handhabungssystem nach Anspruch 8, dadurch gekennzeichnet, daß die Öffnungs- und Schließeinrichtung zwei parallele Anschlagstangen (41, 42) aufweist, die sich senkrecht zur Unterseite des Gehäuses (47) erstrecken und aufeinander zu und voneinander hinweg bewegbar sind, (und) die Anschlagstangen (41, 42) in einer senkrecht zur Neutralachse des Gehäuses (47) liegenden Ebene in gleichem Abstand von der Neutralachse angeordnet sind, so daß die von den Anschlagstangen (41, 42) erfaßten und angehaltenen Reifen (T) durch die Anschlagstangen (41, 42) automatisch zentriert werden.

FIG. I

FIG. 2

EP 0 288 590 B1

# FIG. 3

# FIG. 4

## FIG. 5

# FIG. 6

# FIG. 7

# FIG. 8

# FIG. 9

FIG. 10

# FIG. II

# FIG. I5

# FIG. I2

# FIG. 13

52 52 52 52

59

59a 59a

57

58b 58b

# FIG. 14

53a 56b 56b 56 56b

53 56a 56b 56b

56a